# EUROPEAN PATENT SPECIFICATION

(11) **EP 1 875 723 B1**
(45) Date of publication and mention of the grant of the patent: **26.12.2018**
(21) Application number: 06795052.7
(22) Date of filing: 27.04.2006
(51) Int. Cl.: H04L 29/08

(54) **A METHOD FOR INSERTING AND EXTRACTING A REQUIRED ADDRESS, CORRESPONDING NETWORK FUNCTIONS AND NETWORK**
VERFAHREN ZUM EINFÜGEN UND EXTRAHIEREN EINER BENÖTIGTEN ADRESSE, ZUGEHÖRIGE NETZWERK FUNKTIONEN UND ZUGEHÖRIGES NETZWERK
MÉTHODE D'INSERTION ET EXTRACTION D'UNE ADRESSE REQUISE, FUNCTIONS RÉSEAU ET RÉSEAU CORRESPONDANTS.

(30) Priority: 29.04.2005 GB 0508847
(43) Date of publication of application: 09.01.2008
(73) Proprietor: Nokia Technologies Oy, 02610 Espoo (FI)
(72) Inventor: RASANEN, Juha, A., FIN-02660 Espoo (FI)
(74) Representative: Style, Kelda Camilla Karen
(86) International application number: PCT/IB2006/001550
(87) International publication number: WO 2006/136895

(56) References cited:
- US-A1- 2005 026 591
- "Digital cellular telecommunications system (Phase 2+); Universal Mobile Telecommunications System (UMTS); End to end Quality of Service (QoS) signalling flows (3GPP TS 29.208 version 6.2.1 Release 6); ETSI TS 129 208" ETSI STANDARDS, EUROPEAN TELECOMMUNICATIONS STANDARDS INSTITUTE, SOPHIA-ANTIPO, FR, vol. 3-CN3, no. V621, January 2005 (2005-01), XP014027912 ISSN: 0000-0001 cited in the application
- "Telecommunication and Internet converged Services and Protocols for Advanced Networking; NGN; QoS Frameworkand Requirements; Draft ETSI DTS/TISPAN-05008-NGN" ETSI STANDARDS, EUROPEAN TELECOMMUNICATIONS STANDARDS INSTITUTE, SOPHIA-ANTIPO, FR, no. v002, 1 January 1900 (1900-01-01), XP014029562 ISSN: 0000-0001
- "3rd Generation Partnership Project; Technical Specification Group Core Network; Policy control over Go interface (Release 6)", 3GPP STANDARD; 3GPP TS 29.207, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.2.0, 1 December 2004 (2004-12-01), pages 1-59, XP050372256,

## Description

### Field of the invention

The present invention relates to a network and in particular but not exclusively to a next generation network.

### Background of the invention

A communication system is a facility which enables communication between two or more entities such as terminal equipment (mobile or fixed) or other communication devices and/or network entities and other nodes associated with the communication system. Communication may comprise, for example, communication of voice, electronic mail (email), text messages, data, multi-media and so on. The communication system may also be used for providing users with services, typically for communication between end users and service providers and for delivery of content data to the user devices.

A communication system typically operates in accordance with a given standard or with a given set of specifications, which set out what the various elements of a system are meant to do and how this should be achieved. For example, the standard specification may define if the user or more precisely user equipment is provided with access via a circuit switched path or a packet switched path or both. A communication protocol and/or parameters which should be used for the access to a communication system are typically defined. For example, the manner in which communication should be implemented between the user equipment and elements of the communication network is typically based on a predefined communication protocol. In other words, a specific set of "rules" on which the communication can be based need to be defined to enable the user equipment to communicate via the communication system.

Currently, the networks can be divided into two categories, fixed networks and mobile networks. However, the convergence between the fixed and mobile networks is currently being standardised by various standardisation bodies around the world such as ETSI (European Telecommunication Standard Institute) in the TISPAN (Telecommunication and Internet converged Services and Protocols for Advanced Networking) project, 3GPP (Third Generation Partnership Project) and ITU-T (Telecommunication Standardisation Section of the International Telecommunication Union). The new network concept is called NGN (Next Generation Network). Currently, the NGN concept is based on the IMS (IP Multi-media Sub-System) core network already standardised by 3GPP.

The fixed and mobile conversion is also being developed by several industry forums such .as the MSF (Multi-Services Switching Forum) and MUSE (Multi-Service Access Everywhere) project partially funded by the European Commission.

In the proposed architecture, there is a service policy decision function (SPDF) which is a logical policy decision element for service based policy control. There is also a resource and admission control function in this architecture which for example may provide session admission control and determine which network policies should be applied to a particular access.

The inventor has identified problems with the currently proposed architecture. In particular, the problems are as follows: no mechanism has been set for defining how the policy control function SPDF finds the appropriate resource admission control function RACF for a particular user. This refers to the push function where the SPDF pushes information to the RACF. The problem also exists if the pull operation is used, where the RACF requests information from the SPDF, i.e. how does the RACF find the correct SPDF.

The proposed functionality also has application functions AF. The application function interacts with the policy decision function. The AF makes requests for bearer resources and may receive notification when resources are reserved and released. Other functions may also be provided by the application function. The proposed architecture also has edge routers, such as border gateway functions BGF. A border gateway function provides interface between two IP (Internet protocol) transport domains. It can be at a boundary between an access network and the customer premises equipment, between an access network and a core network or between two core networks.

Another problem with the proposed current architecture is that no mechanism has been defined for determining how the edge router (e.g. the BGF) should find the SPDF or how the SPDF finds the correct edge router, depending on whether a pull or push operation is used.

The prior art and in particular that relating to the proposed NGN functional architecture, such as described in draft ETSI ES 2xxxxv.1.1.1.1 "TISPAN NGN functional architecture" December 2004 simply does not address this issue.
The concept of the AF and the edge router knowing how to use the same PDF (policy decision function) has been addressed in the 3GPP IMS specification for a pull case in the following way. The authorisation token used for binding the control plane and the user plane carries the address of the PDF from the application function to the user equipment in a session establishment message. The user equipment sends the address to the edge router in the PDP (Packet data protocol) context activation/modification message. The router then uses a pull operation towards the PDF. However, the authorisation token approach is undesirable in the NGN context as it would require a 3GPP specific SIP (Session Initiation Protocol) mechanism in the control plane and the NGN terminals. It would also require some new mechanism to transport the token in the user plane. Additionally, the use of a token would not bring any advantage over other alternative binding mechanisms when a NGN access is used.
US Patent 2005/026591 describes a method for ascertaining a billing tariff for billing.
Digital cellular telecommunications system (Phase 2+); Universal Mobile Telecommunications System (UMTS); End to end Quality of Service (QoS) signalling flows (3GPP TS 29.208 version 6.2.1 Release 6); ETSI TS 129 208", January 2005 describes a method for authorizing Quality of Service (QoS) resources at session establishment and resource reservation. "3rd Generation Partnership Project; Technical Specification Group Core Network; Policy control over Go interface (Release 6)", 3GPP STANDARD; 3GPP TS 29.207, no. V6.2.0, December 2004, provides the specification of the Go interface, which is the interface between the GGSN and the Policy Decision Function (PDF).

### Summary of the Invention

It is an aim of embodiments of the present invention to address one or more of the above problems.
According to one aspect of the present invention there is provided a network as defined in claim 1.

According to a further aspect of the present invention there is provided a network function as defined in claim 3.

According to another aspect of the present invention there is provided a fourth network function as defined in claim 8.

According to another aspect of the present invention there is provided a method of providing an address of a first network function to a second network function as defined in claim 11.

According to a further aspect of the present invention, there is provided a method performed by a fourth network function as defined in claim 16.

### Brief description of drawings

For a better-understanding of the present invention and as to how the same may be carry into effect, reference will now be made by way of example only to the accompanying drawings in which:
Figure 1 shows the signalling in a mobile originating case embodying the present invention where a SPDF requires a RACF address;
Figure 2 shows the signalling in the case embodying the invention where the connection is mobile terminated and the SPDF requires the RACF address;
Figure 3 shows the signalling, embodying the present invention, where the edge router requires the SPDF case in a mobile originating case;
Figure 4 shows the signalling, embodying the present invention, in the case where the connection is mobile terminated and the edge router requires the SPDF address; and
Figure 5 shows a RACF architecture in which embodiments of the present invention can be incorporated.

### Description of preferred embodiments of the invention.

In the following embodiments, mobile originated refers to sessions or connections which are initiated by user equipment which may be fixed or mobile. Mobile terminated refers to connections which are made with user equipment but which are initiated elsewhere. Again the user equipment can be fixed or mobile.

Generally, the address of the first network element, element A is required by another network element, element B. This address is inserted by a network element, element C, in a protocol message or messages transported through that network element i.e. network element C that knows the required address. Network element C may be the same as network element A. The required address is extracted from the signalling message by a further network element, element D, and forwarded to the network element, element B, that requires the address. Network element D may be the same as or different to network element B.

As will be described in the more detailed embodiments below, depending on, for example, limitations caused by the used security methods and also in dependence on the awareness of the protocol by the inserting network element, i.e. network element C, the address may be inserted in different ways. For example, the address may be inserted only in certain messages in certain protocol level. For example, the message may be inserted in a session establishment message such as SIP INVITE or SIP 183 RESPONSE. Alternatively, the address may be inserted on a continuous basis in a certain protocol level, for example in the IP level.

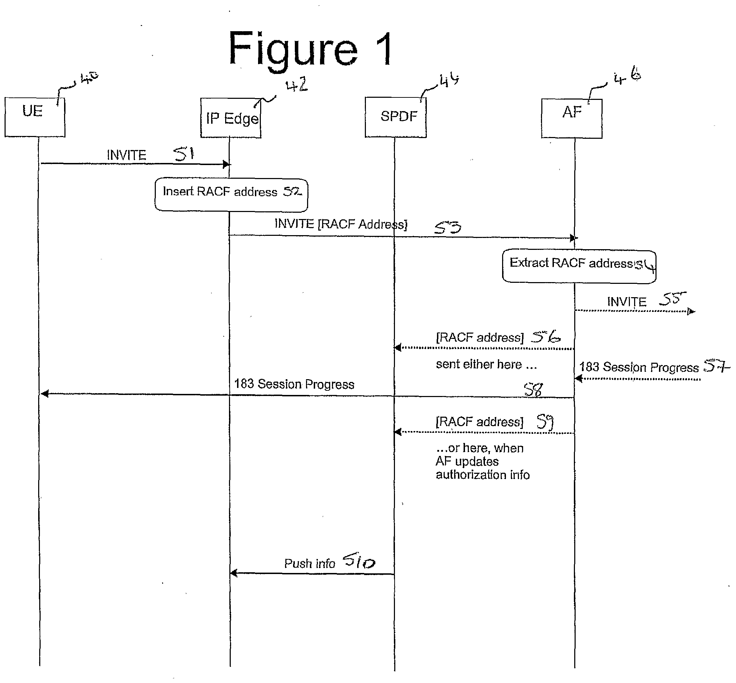

Reference is now made to figure 1 which shows an embodiment where the inserting element, i.e. network element C is SIP aware and the security solution is not a limiting issue. The embodiment shown in Figure 1 relates to a mobile originating case.

Figure 1 shows the signalling flow between user equipment 40, an IP Edge element 42, a SPDF 44 and an AF 46. In this embodiment, the IP Edge element 42 corresponds to network element C whilst the AF element 46 corresponds to network element D. SPDF element 44 corresponds to network element B whilst the RACF (not shown) corresponds to network element A.

Thus, SPDF 44 requires the RACF address. The session establishment .signalling will be transported through the access network element towards the core network. The following signalling flow takes place:
In step S1, an INVITE message is sent from the UE 40 to IP Edge 42.
In step S2 the RACF address is set in the service request message by the IP Edge element 42, in this embodiment in which the user equipment is originating session establishment. The IP Edge element 42 is controlled by the relevant RACF.
In step S3, the INVITE message with the inserted RACF address is sent to the AF 46.
In step S4, the AF 46 extracts the RACF address from the message.
In step S5, the INVITE message is forwarded to other network elements (not shown).
In step S6, the AF 46 sends the RACF address to the SPDF 44 typically in conjunction with session related parameters for authorisation purposes.
In step S7, session information is received by AF 46 which is sent to UE 40 in step S8 by the AF 46.

It should be appreciated that step S6 can be omitted and replaced by step S9 where the RACF address is sent to the. SPDF 44 when the AF 46 updates for example authorisation information.

In step S10 information is sent or pushed from the SPDF 44 to the IP Edge 42.

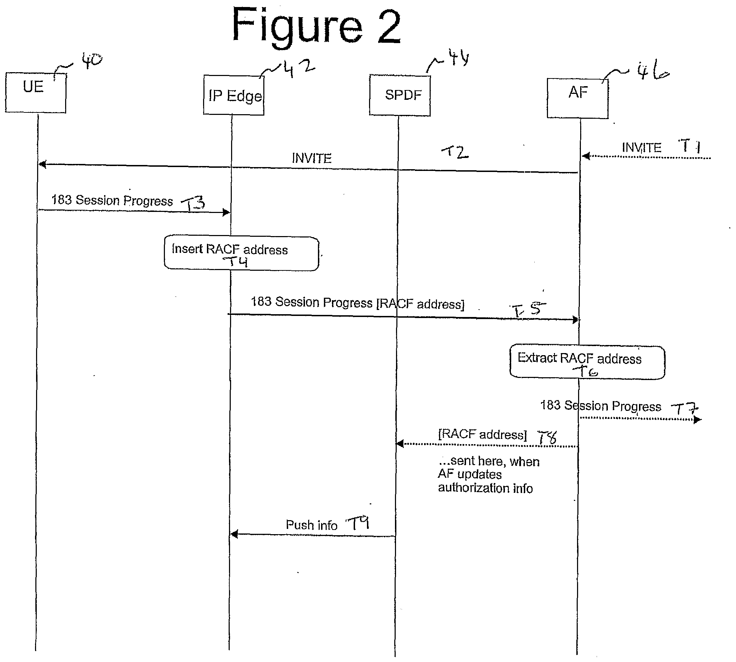

Reference is now made to figure 2 which shows a similar scenario to that shown in figure 1 but for the case where the signalling scenario is for the mobile terminated case, i.e. where the session is established with the user equipment but is not initiated by the user equipment. The same elements as shown in figure 1 are shown in figure 2 and are referred to by the same reference numerals.

In step T1, the AF 46 receives an INVITE message from other network elements (not shown).

In step T2, the AF forwards that INVITE message to the UE 40.

In step T3, the session progresses from the UE 40 to the IP Edge 42.

In step T4, the IP Edge 42 inserts the RACF address into the session message.

In step T5, the message in which the RACF address has been inserted is forwarded to the AF 46.

In step T6, the AF 46 extracts the RACF address.

Step T7 corresponds generally to step S7.

In step T8, the AF 46 sends to the SPDF 44 the RACF address when the AF updates the authorisation information.

Step T9 corresponds generally to step S10.

It should be appreciated that embodiments to the present invention can equally apply where the access network element controlled by the RACF is an AN (access node) or HG (home gateway).

Similar signalling will take place where the SPDF requires the edge router address. The edge router may for example be a GGSN (Gateway GPRS (general packet radio service) support node). This differs from the embodiment shown in figures 1 and 2 in that, that the edge router address is inserted in the service request message by the edge router itself or another element on the path that knows the address of the edge router. In other words, IP Edge element of figures 1 and 2 is replaced by the edge router in the signalling flow and the address in question is that of the edge router.

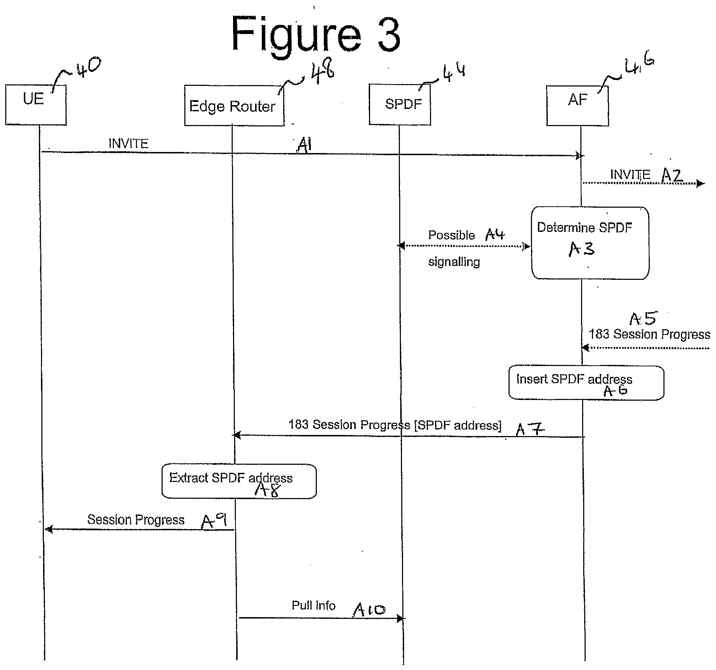

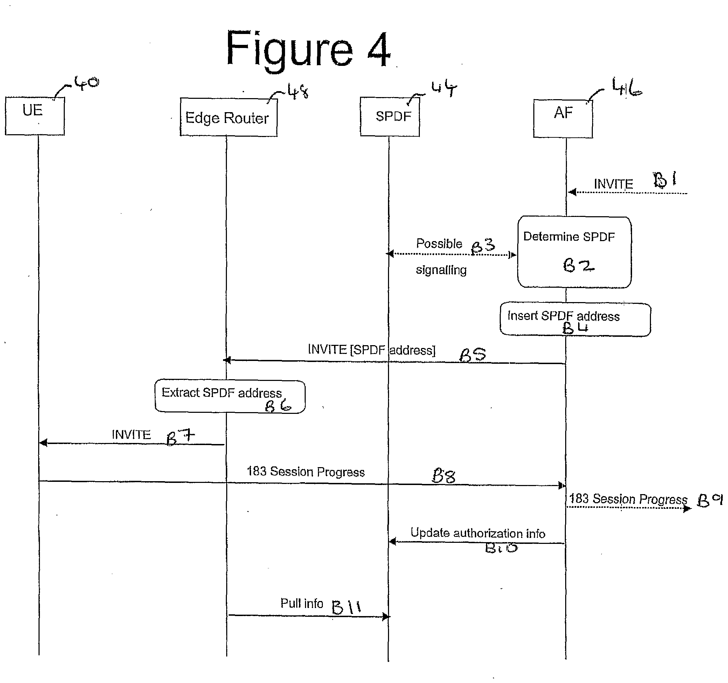

Reference is now made to figures 3 and 4 which show the pull case, that is where the SPDF address is required. In particular, figure 3 will now be described where the session is initiated by the user equipment and in which the edge router requires the SPDF address. The edge router may be a BGF (border gateway function). In particular, figure 3 shows the signalling between the UE 40, an edge router 48, the SPDF 44 and the AF 46.

In step A1, the UE 40 sends an INVITE message to the AF 46.

This INVITE message is sent by the AF 46 to other element networks (not shown) in step A2.

In step A3, the AF46 determines or selects the SPDF for the session being established. This may for example involve signalling as shown in step A4 between the AF and one or more SPDFs 44.

In step A5, the session progress and the AF receives session messages from the other network elements (not shown).

In step A6, the AF will insert the SPDF address in an appropriate message bound for the UE. In the case of a mobile originating session, this address may for example be in a session establishment message bound for the UE. This message is sent to the edge router 48 in step A7 from the AF 46.

In step A8, the SPDF address is extracted by the edge router.

In step A9, session messaging is sent from the edge router A48 to the UE 40.

In step A10, the edge router 48 is able to use the SPDF address to pull information from the SPDF.

In this embodiment, network element A corresponds to the SPDF. The edge router corresponds to network element B and D whilst the AF 46 corresponds to network element C.

Reference is now made to figure 4 which shows the signalling, corresponding to the scenario shown in figure 3 but where the session is not initiated by the user equipment, i.e. is mobile terminated.

In step B1, the AF 46 receives an INVITE message B1 from other network elements, not shown. Steps B2, B3 and B4 correspond generally to steps A3, A4 and A6 respectively. In particular, SPDF address is inserted into an INVITE message which is sent in step B5 to the edge router 48. Step B6 corresponds generally to step A8. In step B7, an INVITE message is sent by the edge router 48 to the UE. In step B8, the session progresses between the UE 40 and the AF46.

In step B9, further session messages are sent from AF 46 to other network elements (not shown).

In step B10, the AF 46 sends updated authorisation information to the SPDF 44.

In step B11, the edge router 48 pulls information from the SPDF 44. This is from the SPDF identified by the extracted address.

In the arrangement shown in figures 3 and 4, the edge router can be replaced by a BGF function.

It should be appreciated that similar signalling will, take place where the RACF or Edge router requires the SPDF address.

In the scenario shown in figure 3, the edge router 48 is replaced by the IP Edge element 42. In this embodiment, the SPDF is element A, the RACF is element B, AF is element C and IP Edge 42 is the element D.

When the AF has selected or determined the SPDF or the session being established, the AF sets the SPDF address in a session establishment/acknowledgement message bound for the UE, depending on whether it is a mobile originating or a mobile terminated case respectively. The session establishment signalling will be transported through the access network element towards the UE. The access network element controlled by the relevant RACF, for example the IP Edge element extracts the SPDF address from the message and forwards the address to the RACF. The RACF can use the address to pull information from the SPDF either directly or via the IP Edge element. Again, the IP Edge element can be replaced by the AN or HG dependent on the network in question.

In the following example embodiments of the invention, the inserting element i.e. element C does not need to be SIP, or more generally higher layer protocol, aware. This case also is not affected by transport layer security TLS which is being discussed in TISPAN and 3GPP Rel-7. In the example embodiments of the invention, a lower layer protocol is used for transporting the required addresses or more generally the required information. In these example embodiments of the invention, the IP level is used as a lower layer protocol.

In this following example, i.e. the push case, the SPDF requires the RACF address.

The session establishment signalling will be transported through the access network element towards the core network, possibly via their own signalling pipes/tunnels.

Accordingly, the RACF address is set in the IP protocol frames' by an access network element controlled by the RACF. This may be for example an IP Edge element, an AN element or HG element. In the case of an IPv4 the address can be transported in the options fields and in an IPv6 case in an extension header.

If provided, an NAT-PT (network address translator-port translator) element arranged between the IP Edge element and SPDF can translate the IPv4 option header to the IPv6 extension header and vice versa. This would only be required where both versions of the IP protocol are being used.

When the AF receives the session establishment signalling, the AF would extract the RACF address from the IP frame. When the AF later contacts the SPDF typically to send or push session related parameters for authorisation purposes, the AF sends the RACF address to the SPDF. This is similar to the scenario described for example in relation to figure 1. However, in figure 1, SIP signalling is used. In this modified embodiment, the information is included in the IP level messages.

The following scenario, the SPDF requires the edge router address. The session establishment signalling will be transported through the access network elements towards the core network. Thus, the edge router address is set in the IP protocol frames by the edge router itself or another element on the path that knows the address of the edge router. When the AF receives the session establishment signalling, the AF extracts the edge router address from the IP frame. When the AF later contacts the SPDF, typically to send or push session related parameters for authorisation purposes, the AF sends the edge router address to the SPDF.

It should be appreciated that the above scenarios can be applied individually or in combination. For example, in a combined case in the NGN architecture, one of the elements, for example the edge router/BGF needs the SPDF address for a pull operation and the SPDF needs the address of another element, for example the RACF to push information to it. In that case, two of the relevant procedures described above could be used.

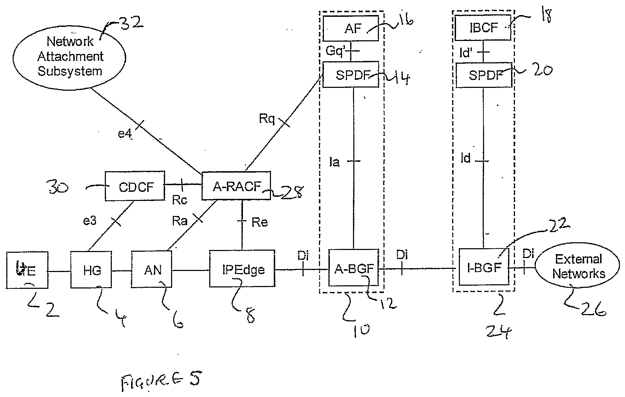

Reference is now made to figure 5 which shows an RACF functional architecture in which embodiments of the present invention may be incorporated. This is as proposed by ETSI for the TISPAN architecture. User equipment UE 2 is arranged to be connected to a home gateway HG 4.

The home gateway 4 is connected to an access node 6 and a CDCF 30. The AN 6 is connected to an IP Edge node 8 and to an A-RACF (Admission-Resource and Admission Control Function) 28. The CDCF 30 is also connected to the A-RACF 28.

A network attachment sub-system 32 is connected to the A-RACF. The A-RACF 28 and IP Edge element 8 are connected to a first service provider network 10. The service provider network 10 has a SPDF 14, an application function AF. 16 and an A-BGF access border gateway function 12. The IP Edge 8 is connected to the A-BGF12 whilst the A-RACF 28 is connected to the SPDF 14.

A second service provider network 24 is shown having a I-BCF interconnection border control function 18, a SPDF 20 and a IBGF interconnection border gateway function.

The two service provider networks 10 and 24 are connected by the A-BGF 12 of the first service provider network 10 and I-BGF 22 of the second service provider network 24. The second service provider network 24 is connected to external networks 26 via the I-BGF 22.

The A-BGF is a packet to packet gateway. The I-BGF performs both policy enforcement functions and network access functions under the control of the SPDF.

The IP Edge 8 is ranged to terminate subscribing links, forward upstream packets to the right external network, forward downstream packets from external networks to the correct links based on an IP address. The IP Edge will know the IP address assigned to each link. The IP Edge may perform the releasing and shaping in respect of downstream connections for quality of service control .in the access network.

I-BGF is packet to packet gateway element that forms network address and port translation.

The application function interacts with the SPDF. The application function makes requests for bearer resources and may receive notifications when resources are reserved and released.

Thus the current 3GPP token mechanism transports the address in SIP session establishment to the UE, the UE transports the address in a user plane establishment signalling (PDP context establishment) to the gateway (GGSN). In the current 3GPP mechanism the entities are session aware. In embodiments of the invention, this is not necessary. Embodiments of the invention may send the address on a continuous basis, because the sending entity may be session and/or SIP unaware. In other words the address is includes in a plurality of messages sent by the third network element. In embodiments of the invention, the address may be moved to the final user e.g. in a different operation (e.g. information pushed from AF to PDF) than in current 3GPP case. Furthermore in embodiments of the invention the PDF uses the address of a gateway. In the embodiment using the IP based methodology, there is no need for session awareness.

It should be appreciated that reference has been made to network elements. Embodiments of the invention may be implemented by network functions, one or more of which are incorporated in a given network element.

It is also noted herein that while the above describes exemplifying embodiments of the invention, there are several variations and modifications which may be made to the disclosed solution without departing from the scope of the present invention as defined in the appended claims.

## Claims

1. A network comprising:
a first network function (40) having an address;
a second network function (44) requiring the address of the first network function;
a third network function (42) configured to insert the address of the first network function into at least one of an options field and an extension header of an IP protocol message; and
a fourth network (46) function, said third network function being configured to send said message to said fourth network function and said fourth network function being configured to extract said address and send the address to the second network function,
wherein each of said first and second network functions comprises at least one of:
resource and admission control function; service policy decision function; edge router and border gateway function;
and wherein each of said third and fourth network functions comprises at least one of: IP edge router; edge router; border gateway function; Application Function; access node; home gateway; and access network element controlled by a resource and admission control function.

2. The network as claimed in claim 1, wherein said second network function (44) is configured to at least one of push information to and pull information from said first network function.

3. A network function (42) for use in a network, said network function being configured to insert an address of a first network function (40) into at least one of an options field and an extension header of an IP protocol message and to send said message to a further network function wherein said network function (42) comprises at least one of: IP edge router; edge router; border gateway function; Application Function; access node; home gateway; and access network element controlled by a resource and admission control function, and said first network function (40) comprises at least one of resource and admission control function; service policy decision function; edge router and border gateway function.

4. The network function as claimed in claim 3, wherein said network function is configured to send said address a plurality of times.

5. The network function (42) as claimed in claim 3, wherein said network function is configured to insert said address in a SIP message.

6. The network function (42) as claimed in claim 3, wherein said network function is configured to insert said address in SIP session establishment.

7. The network function (42) as claimed in claim 3, wherein said network function is configured to insert said address in an INVITE or SIP 183 response.

8. A fourth network function (46), said fourth network function being configured to receive an IP protocol message from a third network function comprising the address of a first network function, said fourth network function being configured to extract said address from at least one of an options field and an extension header of the IP protocol message and send the address to a second network function requiring the address of the first network function,
wherein each of said first and second network functions comprises at least one of:
resource and admission control function; service policy decision function; edge router and border gateway function;
and wherein each of said third and fourth network functions comprises at least one of: IP edge router; edge router; border gateway function; Application Function; access node; home gateway; and access network element controlled by a resource and admission control function.

9. The fourth network function as claimed in claim 8, wherein said fourth network function is configured to send said address to the second network function along with session related parameters.

10. The fourth network function as claimed in claim 9, wherein said session related parameters are for authorization purposes.

11. A method of providing an address of a first network function (40) to a second network function (44) requiring the address of the first network function, said method comprising the steps of:
inserting by a third network function (42) an address of a first network function into at least one of an options field and an extension header of an IP protocol message;
sending said message to a fourth network function;
extracting, by said fourth network function (46), said address; and
sending by the fourth network function the address to a second network function, requiring the address of the first network function,
wherein each of said first and second network functions comprises at least one of:
resource and admission control function; service policy decision function; edge router and border gateway function;
and wherein each of said third and fourth network functions comprises at least one of: IP edge router; edge router; border gateway function; Application Function; access node; home gateway; and access network element controlled by a resource and admission control function.

12. The method as claimed in claim 11 comprising sending said address a plurality of times.

13. The method as claimed in claim 11, comprising inserting said address in a SIP message.

14. The method as claimed in claim 11, comprising inserting said address in a SIP session establishment.

15. The method as claimed in claim 11 comprising inserting said address in an INVITE or SIP 183 response.

16. A method performed by a fourth network function comprising:
receiving an IP protocol message from a third network function (42) comprising the address of a first network function (40);
extracting said address from at least one of an options field and an extension header of the IP protocol message; and
sending the address to a second network function (44) requiring the address of the first network function, wherein each of said first and second network functions comprises at least one of:
resource and admission control function; service policy decision function; edge router and border gateway function;
and wherein each of said third and fourth network functions comprises at least one of: IP edge router; edge router; border gateway function; Application Function; access node; home gateway; and access network element controlled by a resource and admission control function.

17. The method as claimed in claim 16, comprising sending said address to the second network function along with session related parameters.

18. The method as claimed in claim 17, wherein said session related parameters are for authorisation purposes.

## Patentansprüche

1. Netzwerk, umfassend:
eine erste Netzwerkfunktion (40) mit einer Adresse;
eine zweite Netzwerkfunktion (44), die die Adresse der ersten Netzwerkfunktion benötigt;
eine dritte Netzwerkfunktion (42), die konfiguriert ist, die Adresse der ersten Netzwerkfunktion in ein Optionsfeld und/oder einen Erweiterungsheader einer IP-Protokollnachricht einzufügen; und
eine vierte Netzwerkfunktion (46), wobei die dritte Netzwerkfunktion konfiguriert ist, die Nachricht an die vierte Netzwerkfunktion zu senden, und die vierte Netzwerkfunktion konfiguriert ist, die Adresse zu extrahieren und die Adresse an die zweite Netzwerkfunktion zu senden,
wobei jede der ersten und zweiten Netzwerkfunktionen mindestens eine umfasst von:
Ressourcen- und Zugangssteuerungsfunktion; Dienstrichtlinien-Entscheidungsfunktion; Edge-Router- und Border-Gateway-Funktion;
und wobei jede der dritten und vierten Netzwerkfunktion mindestens eines umfasst von: IP-Edge-Router-; Edge-Router-; Border-Gateway-Funktion; Anwendungsfunktion; Zugangsknoten; Home-Gateway; und ein Zugangsnetzwerkelement, das durch eine Ressourcen- und Zugangssteuerungsfunktion gesteuert wird.

2. Netzwerk nach Anspruch 1, wobei die zweite Netzwerkfunktion (44) konfiguriert ist, Information an die erste Netzwerkfunktion zu übertragen und/oder Information von der ersten Netzwerkfunktion abzurufen.

3. Netzwerkfunktion (42) zur Verwendung in einem Netzwerk, wobei die Netzwerkfunktion konfiguriert ist, eine Adresse einer ersten Netzwerkfunktion (40) in ein Optionsfeld und/oder einen Erweiterungsheader einer IP-Protokollnachricht einzufügen und die Nachricht an eine weitere Netzwerkfunktion zu senden, wobei die Netzwerkfunktion (42) mindestens eines umfasst von: IP-Edge-Router-; Edge-Router-; Border-Gateway-Funktion; Anwendungsfunktion; Zugangsknoten; Home-Gateway; und ein Zugangsnetzwerkelement, das durch eine Ressourcen- und Zugangssteuerungsfunktion gesteuert wird, und wobei die erste Netzwerkfunktion (40) mindestens eine von einer Ressourcen- und Zugangssteuerungsfunktion; Dienstrichtlinien-Entscheidungsfunktion; Edge-Router- und Border-Gateway-Funktion umfasst.

4. Netzwerkfunktion nach Anspruch 3, wobei die Netzwerkfunktion konfiguriert ist, die Adresse mehrmals zu senden.

5. Netzwerkfunktion (42) nach Anspruch 3, wobei die Netzwerkfunktion konfiguriert ist, die Adresse in eine SIP-Nachricht einzufügen.

6. Netzwerkfunktion (42) nach Anspruch 3, wobei die Netzwerkfunktion konfiguriert ist, die Adresse in einen SIP-Sitzungsaufbau einzufügen.

7. Netzwerkfunktion (42) nach Anspruch 3, wobei die Netzwerkfunktion konfiguriert ist, die Adresse in eine EINLADE- oder SIP-183-Antwort einzufügen.

8. Vierte Netzwerkfunktion (46), wobei die vierte Netzwerkfunktion konfiguriert ist, von einer dritten Netzwerkfunktion eine IP-Protokollnachricht zu empfangen, die die Adresse einer ersten Netzwerkfunktion umfasst, wobei die vierte Netzwerkfunktion konfiguriert ist, die Adresse aus einem Optionsfeld und/oder einem Erweiterungsheader der IP-Protokollnachricht zu extrahieren und die Adresse an eine zweite Netzwerkfunktion zu senden, die die Adresse der ersten Netzwerkfunktion benötigt,
wobei jede der ersten und zweiten Netzwerkfunktion mindestens eine umfasst von:
Ressourcen- und Zugangssteuerungsfunktion; Dienstrichtlinien-Entscheidungsfunktion; Edge-Router- und Border-Gateway-Funktion;
und wobei jede der dritten und vierten Netzwerkfunktion mindestens eines umfasst von: IP-Edge-Router-; Edge-Router-; Border-Gateway-Funktion; Anwendungsfunktion; Zugangsknoten; Home-Gateway; und ein Zugangsnetzwerkelement, das durch eine Ressourcen- und Zugangssteuerungsfunktion gesteuert wird.

9. Vierte Netzwerkfunktion nach Anspruch 8, wobei die vierte Netzwerkfunktion konfiguriert ist, die Adresse zusammen mit sitzungsbezogenen Parametern an die zweite Netzwerkfunktion zu senden.

10. Vierte Netzwerkfunktion nach Anspruch 9, wobei die sitzungsbezogenen Parameter Autorisierungszwecken dienen.

11. Verfahren zur Bereitstellung einer Adresse einer ersten Netzwerkfunktion (40) für eine zweite Netzwerkfunktion (44), die die Adresse der ersten Netzwerkfunktion benötigt, wobei das Verfahren die folgenden Schritte umfasst:
Einfügen, durch eine dritte Netzwerkfunktion (42), einer Adresse einer ersten Netzwerkfunktion in ein Optionsfeld und/oder einen Erweiterungsheader einer IP-Protokollnachricht;
Senden der Nachricht an eine vierte Netzwerkfunktion;
Extrahieren der Adresse durch die vierte Netzwerkfunktion (46); und
Senden, durch die vierte Netzwerkfunktion, der Adresse an eine zweite Netzwerkfunktion, die die Adresse der ersten Netzwerkfunktion benötigt,
wobei jede der ersten und zweiten Netzwerkfunktion mindestens eine umfasst von:
Ressourcen- und Zugangssteuerungsfunktion; Dienstrichtlinien-Entscheidungsfunktion; Edge-Router- und Border-Gateway-Funktion;
und wobei jede der dritten und vierten Netzwerkfunktion mindestens eines umfasst von: IP-Edge-Router-; Edge-Router-; Border-Gateway-Funktion; Anwendungsfunktion; Zugangsknoten; Home-Gateway; und ein Zugangsnetzwerkelement, das durch eine Ressourcen- und Zugangssteuerungsfunktion gesteuert wird.

12. Verfahren nach Anspruch 11, umfassend mehrmaliges Senden der Adresse.

13. Verfahren nach Anspruch 11, umfassend Einfügen der Adresse in eine SIP-Nachricht.

14. Verfahren nach Anspruch 11, umfassend Einfügen der Adresse in einen SIP-Sitzungsaufbau.

15. Verfahren nach Anspruch 11, umfassend Einfügen der Adresse in eine EINLADE- oder SIP-183-Antwort.

16. Verfahren, das von einer vierten Netzwerkfunktion durchgeführt wird, umfassend:
Empfangen, von einer dritten Netzwerkfunktion (42), einer IP-Protokollnachricht, die die Adresse einer ersten Netzwerkfunktion (40) umfasst;
Extrahieren der Adresse aus einem Optionsfeld und/oder einem Erweiterungsheader der IP-Protokollnachricht; und
Senden der Adresse an eine zweite Netzwerkfunktion (44), die die Adresse der ersten Netzwerkfunktion benötigt, wobei jede der ersten und zweiten Netzwerkfunktion mindestens eine umfasst von:
Ressourcen- und Zugangssteuerungsfunktion; Dienstrichtlinie-Entscheidungsfunktion; Edge-Router- und Border-Gateway-Funktion;
und wobei jede der dritten und vierten Netzwerkfunktion mindestens eines umfasst von: IP-Edge-Router-; Edge-Router-; Border-Gateway-Funktion; Anwendungsfunktion; Zugangsknoten; Home-Gateway; und ein Zugangsnetzwerkelement, das durch eine Ressourcen- und Zugangssteuerungsfunktion gesteuert wird.

17. Verfahren nach Anspruch 16, umfassend Senden der Adresse an die zweite Netzwerkfunktion zusammen mit sitzungsbezogenen Parametern.

18. Verfahren nach Anspruch 17, wobei die sitzungsbezogenen Parameter Autorisierungszwecken dienen.

## Revendications

1. Réseau comprenant :
une première fonction de réseau (40) ayant une adresse ;
une deuxième fonction de réseau (44) requérant l'adresse de la première fonction de réseau ;
une troisième fonction de réseau (42) configurée pour insérer l'adresse de la première fonction de réseau dans un champ d'options et/ou dans un en-tête d'extension d'un message de protocole IP ; et
une quatrième fonction de réseau (46), ladite troisième fonction de réseau étant configurée pour envoyer ledit message à ladite quatrième fonction de réseau et ladite quatrième fonction de réseau étant configurée pour extraire ladite adresse et pour envoyer l'adresse à la deuxième fonction de réseau,
dans lequel chacune desdites première et deuxième fonctions de réseau comprend :
une fonction de commande de ressources et d'admission ; et/ou une fonction de décision de politique de service ; et/ou une fonction de routeur de périphérie et de passerelle frontière ;
et dans lequel chacune desdites troisième et quatrième fonctions de réseau comprend : un routeur de périphérie IP ; et/ou un routeur de périphérie ; et/ou une fonction de passerelle frontière ; et/ou une fonction d'application ; et/ou un noeud d'accès ; et/ou une passerelle domestique ; et/ou un élément de réseau d'accès commandé par une fonction de commande de ressources et d'admission.

2. Réseau selon la revendication 1, dans lequel ladite deuxième fonction de réseau (44) est configurée pour promouvoir des informations dans ladite première fonction de réseau et/ou pour retirer des informations de cette dernière.

3. Fonction de réseau (42) destinée à être utilisée dans un réseau, ladite fonction de réseau étant configurée pour insérer une adresse d'une première fonction de réseau (40) dans un champ d'options et/ou dans un en-tête d'extension d'un message de protocole IP et pour envoyer ledit message à une autre fonction de réseau, dans laquelle ladite fonction de réseau (42) comprend un routeur de périphérie IP ; et/ou un routeur de périphérie ; et/ou une fonction de passerelle frontière ; et/ou une fonction d'application ; et/ou un noeud d'accès ; et/ou une passerelle domestique ; et/ou un élément de réseau d'accès commandé par une fonction de commande de ressources et d'admission, et ladite première fonction de réseau (40) comprend une fonction de commande de ressources et d'admission ; et/ou une fonction de décision de politique de service ; et/ou une fonction de routeur de périphérie et de passerelle frontière.

4. Fonction de réseau selon la revendication 3, dans laquelle ladite fonction de réseau est configurée pour envoyer ladite adresse une pluralité de fois.

5. Fonction de réseau (42) selon la revendication 3, dans laquelle ladite fonction de réseau est configurée pour insérer ladite adresse dans un message SIP.

6. Fonction de réseau (42) selon la revendication 3, dans laquelle ladite fonction de réseau est configurée pour insérer ladite adresse dans un établissement de session SIP.

7. Fonction de réseau (42) selon la revendication 3, dans laquelle ladite fonction de réseau est configurée pour insérer ladite adresse dans une réponse d'INVITE ou de SIP 183.

8. Quatrième fonction de réseau (46), ladite quatrième fonction de réseau étant configurée pour recevoir un message de protocole IP en provenance d'une troisième fonction de réseau comprenant l'adresse d'une première fonction de réseau, ladite quatrième fonction de réseau étant configurée pour extraire ladite adresse d'un champ d'options et/ou d'un en-tête d'extension du message de protocole IP et pour envoyer l'adresse à une deuxième fonction de réseau requérant l'adresse de la première fonction de réseau,
dans laquelle chacune desdites première et deuxième fonctions de réseau comprend :
une fonction de commande de ressources et d'admission ; et/ou une fonction de décision de politique de service ; et/ou une fonction de routeur de périphérie et de passerelle frontière ;
et dans laquelle chacune desdites troisième et quatrième fonctions de réseau comprend : un routeur de périphérie IP ; et/ou un routeur de périphérie ; et/ou une fonction de passerelle frontière ; et/ou une fonction d'application ; et/ou un noeud d'accès ; et/ou une passerelle domestique ; et/ou un élément de réseau d'accès commandé par une fonction de commande de ressources et d'admission.

9. Quatrième fonction de réseau selon la revendication 8, dans laquelle ladite quatrième fonction de réseau est configurée pour envoyer ladite adresse à la deuxième fonction de réseau conjointement avec des paramètres associés à la session.

10. Quatrième fonction de réseau selon la revendication 9, dans laquelle lesdits paramètres associés à la session sont destinés à des fins d'autorisation.

11. Procédé de fourniture d'une adresse d'une première fonction de réseau (40) à une deuxième fonction de réseau (44) requérant l'adresse de la première fonction de réseau, ledit procédé comprenant les étapes consistant :
à insérer, au moyen d'une troisième fonction de réseau (42), une adresse d'une première fonction de réseau dans un champ d'options et/ou dans un en-tête d'extension d'un message de protocole IP ; et
à envoyer ledit message à une quatrième fonction de réseau ;
à extraire, au moyen de ladite quatrième fonction de réseau (46), ladite adresse ; et
à envoyer, au moyen de la quatrième fonction de réseau, l'adresse à une deuxième fonction de réseau, requérant l'adresse de la première fonction de réseau,
dans lequel chacune desdites première et deuxième fonctions de réseau comprend :
une fonction de commande de ressources et d'admission ; et/ou une fonction de décision de politique de service ; et/ou une fonction de routeur de périphérie et de passerelle frontière ;
et dans lequel chacune desdites troisième et quatrième fonctions de réseau comprend : un routeur de périphérie IP ; et/ou un routeur de périphérie ; et/ou une fonction de passerelle frontière ; et/ou une fonction d'application ; et/ou un noeud d'accès ; et/ou une passerelle domestique ; et/ou un élément de réseau d'accès commandé par une fonction de commande de ressources et d'admission.

12. Procédé selon la revendication 11, comprenant l'envoi de ladite adresse une pluralité de fois.

13. Procédé selon la revendication 11, comprenant l'insertion de ladite adresse dans un message SIP.

14. Procédé selon la revendication 11, comprenant l'insertion de ladite adresse dans un établissement de session SIP.

15. Procédé selon la revendication 11, comprenant l'insertion de ladite adresse dans une réponse d'INVITE ou de SIP 183.

16. Procédé réalisé par une quatrième fonction de réseau, comprenant :
la réception d'un message de protocole IP en provenance d'une troisième fonction de réseau (42) comprenant l'adresse d'une première fonction de réseau (40) ;
l'extraction de ladite adresse d'un champ d'options et/ou d'un en-tête d'extension du message de protocole IP ; et
l'envoi de l'adresse à une deuxième fonction de réseau (44) requérant l'adresse de la première fonction de réseau,
dans lequel chacune desdites première et deuxième fonctions de réseau comprend :
une fonction de commande de ressources et d'admission ; et/ou une fonction de décision de politique de service ; et/ou une fonction de routeur de périphérie et de passerelle frontière ;
et dans laquelle chacune desdites troisième et quatrième fonctions de réseau comprend : un routeur de périphérie IP ; et/ou un routeur de périphérie ; et/ou une fonction de passerelle frontière ; et/ou une fonction d'application ; et/ou un noeud d'accès ; et/ou une passerelle domestique ; et/ou un élément de réseau d'accès commandé par une fonction de commande de ressources et d'admission.

17. Procédé selon la revendication 16, comprenant l'envoi de ladite adresse à la deuxième fonction de réseau conjointement avec des paramètres associés à la session.

18. Procédé selon la revendication 17, dans lequel lesdits paramètres associés à la session sont destinés à des fins d'autorisation.
